# EUROPÄISCHE PATENTSCHRIFT

(11) **EP 2 889 601 B1**
(45) Veröffentlichungstag und Bekanntmachung des Hinweises auf die Patenterteilung: **08.08.2018**
(21) Anmeldenummer: 14194895.0
(22) Anmeldetag: 26.11.2014
(51) Int. Cl.: G01M 15/14, G01B 11/00

(54) **EIN VERFAHREN ZUR HERSTELLUNG VON SCHAUFELN**
A METHOD FOR MANUFACTURING BLADES
UNE MÉTHODE POUR LA FABRICATION DES AUBES

(30) Priorität: 18.12.2013 DE 102013226422
(43) Veröffentlichungstag der Anmeldung: 01.07.2015
(73) Patentinhaber: MTU Aero Engines AG, 80995 München (DE)
(72) Erfinder: Czerniewicz, Frank, 82131 Gauting (DE); Dupslaff, Manfred, 82223 Eichenau (DE); Lahmer, Manfred, 82223 Eichenau (DE); Großmann, David, 01900 Großröhrsdorf (DE)

(56) Entgegenhaltungen:
- WO-A1-2010/099890
- CN-A- 103 093 065
- DE-A1-102009 010 374

## Beschreibung

Die Erfindung betrifft ein Verfahren zur Herstellung von Schaufeln.

Für die Herstellung von Schaufelrädern mit einer Vielzahl an Schaufeln werden Kriterien, typischerweise Toleranzbänder, festgelegt, wie beispielsweise in der Druckschrift WO 2010/099 890 A1 beschrieben ist. Erfüllen die hergestellten Schaufeln die Kriterien nicht, so wird die entsprechende Schaufel aussortiert. Dabei kann es vorkommen, dass die als *schlecht eingestufte* Schaufel zwar die festgelegten Toleranzen nicht erfüllt, aber dennoch kaum bis gar keine negativen aerodynamischen Auswirkungen aufweisen. Somit werden Schaufel mit vermeintlich nicht guten mechanischen Abmessungen aussortiert, obwohl die Schaufel die erforderlichen strukturmechanischen und aerodynamischen Kriterien erfüllen würden. Werden dagegen die Toleranzbänder aufgeweitet, so werden Schaufeln dagegen für gut befunden, die allerdings aerodynamisch oder strukturmechanisch nachteilige Eigenschaften aufweisen. Bislang werden enge Toleranzbänder bevorzugt, wobei dann die aussortierten Schaufeln mühsam mit großem Aufwand händisch von Fachexperten untersucht werden müssen. Für eine kleine Anzahl an Schaufeln ist dies ein gangbarer Weg, allerdings für eine Serienfertigung mit einer hohen Schaufelanzahl wirtschaftlich nicht tragbar. Ein dafür automatisiertes Verfahren ist bislang nicht bekannt.

Das Dokument DE 10 2009 010 374 A1 offenbart ein Verfahren zum automatisierten Erzeugen eines Flächenmodells einer Schaufel einer Turbomaschine. Somit liegt der vorliegenden Erfindung die Aufgabe zu Grunde ein Verfahren zur Herstellung von Schaufeln vorzustellen, die darin insbesondere automatisiert bewertet werden.

Die Aufgabe wird durch die Merkmale des Anspruchs 1 gelöst.

Die Erfindung betrifft ein Verfahren zur Herstellung von Schaufeln. Im Verfahren wird zuerst die dreidimensionale Geometrie des Schaufelblatts einer Schaufel, insbesondere einer Verdichterlaufschaufel, erfasst. Anschließend werden die erfassten Werte in mindestens einem Flächenmodell überführt. Das Flächenmodell wird vom Messzustand in den Betriebszustand transformiert. Nach der Transformation werden die aerodynamischen und/oder strukturmechanischen Eigenschaften des Schaufelblattes bewertet. Schließlich wird die Performanz eines Bauteil bewertet.

Dieses Verfahren ist insbesondere vorteilhaft, da es automatisch ablaufen kann. Dies ist sehr zeitsparend und damit können vielen Schaufeln in kurzer Zeit automatisiert bewertet werden. Eine Bewertung durch einen Fachexperten erfordert einige Stunden, wobei dieses Verfahren die gleiche Tätigkeit innerhalb von Minuten erledigen kann. Ferner erlangt man verbesserte Erkenntnis über die Wirkung von Bauteilabweichungen auf technische Zielgrößen und kann dadurch überhöhte Produktanforderungen vermeiden.

In einer weiteren Ausgestaltung der Erfindung wird die dreidimensionale Geometrie des Schaufelblattes optisch, mittels Streifenmuster, erfasst. Dies ist insbesondere sehr vorteilhaft, da die komplette Geometrie des Schaufelblatts mit wenigen Aufnahmen schnell erfasst werden kann.

In einer weiteren vorteilhaften Ausgestaltung der Erfindung wird beim Überführen in Flächenmodelle mindestens 4 Flächenmodelle verwendet werden, wobei eine Fläche für die Vorderkante, eine Fläche für die Hinterkante, eine Fläche für die Saugseite und eine Fläche für die Druckseite vorgesehen ist. Dies ist insbesondere vorteilhaft, da für die Digitalisierung weniger Daten anfallen und somit die weitere Datenverarbeitung schneller erfolgen kann. Durch diese Unterteilung können auch die Eigenheiten der entsprechenden Flächen berücksichtigt werden. Ferner können Flächenmodell für die Filetradien berücksichtigt werden. Das sind die Übergangsflächen vom Schaufelblatt zur Schaufelnabe. Erfindungsgemäß vor der dreidimensionalen geometrischen Erfassung des Schaufelblatts, eine Vorbewertung des Schaufelblattes durchgeführt, wobei nur die Schaufeln weiterbewertet werden, die die Vorbewertung nicht erfüllen. Damit wird in vorteilhafterweise verhindert, dass nur die vermeintliche Ausschussware zusätzlich untersucht wird. Die in der Vorbewertung als gut eingestuften Schaufelblätter werden damit logischerweise nicht weiter bewertet. Dies erspart viel Zeit. Erfindungsgemäß wird in der Vorbewertung vom Schaufelblatt mindestens ein Profilschnitt rechnerisch und/oder taktil erzeugt. Die Vorbewertung kann beispielsweise mittels einer taktilen Messung auf bestimmten Höhen des Schaufelblatts erfolgen, so dass eine bestimmte Anzahl an Profilschnitten (mindestens ein Profilschnitt) entstehen. Diese Profilschnitte müssen in einem Toleranzband liegen, damit die Vorbewertung für die entsprechende Schaufel aus erfolgreich bewertet werden kann. Vorzugsweise erfolgt mit den in der Vorbewertung als gut eingestuften Schaufeln keine weitere Analyse. Solche Profilschnitte können auch rein rechnerisch entstehen. Diese können aus der Punktewolke ermittelt werden, die beim dreidimensionalen Erfassen des Schaufelblattes entstehen. Erfindungsgemäß ist das Bauteil eine Schaufel, ein Gitter, ein Modul und/oder eine Strömungsmaschine, insbesondere eine Gasturbine. Dies ist insbesondere vorteilhaft, da nicht nur die einzelne Schaufel berücksichtigt und bewertet wird, sondern die konkreten Auswirkungen eines als schlecht eingestuften Schaufelblattes auf das Gitter, Modul und/oder auf das gesamte Triebwerk beurteilt werden können. Konkret wird damit die essentielle Frage beantwortet, ob die mechanischen Abweichungen eine Auswirkung auf beispielsweise den Wirkungsgrad des Gesamtsystems haben. Dies führt dazu, dass weniger Schaufelblätter aussortiert werden und die Produktionskosten gesenkt werden können. Erfindungsgemäß wird nach der Überführung in mindestens einem Flächenmodell ein gemitteltes Schaufelblatt berechnet, wobei beim Transformieren die Daten des gemittelten Schaufelblattes verwendet werden. In einer weiteren vorteilhaften Ausgestaltung der Erfindung werden beim Mitteln, vorzugsweise nur, die in der Vorbewertung als gut eingestuften Schaufelblätter berücksichtigt. Dies hat den Vorteil, dass die marginalen Unterschiede in diesen als gut eingestuften Schaufeln ausgemittelt werden.

In einer weiteren vorteilhaften Ausgestaltung der Erfindung erfolgt die Mittelung in Abhängigkeit von den in der Vorbewertung erfassten Profilschnitte der Schaufelblätter eines Gitters. Dies ist insbesondere vorteilhaft, da die Datenverarbeitung sehr schnell erfolgen kann, insbesondere, weil die Profilschnitte von allen (als gut eingestuften) Schaufeln bereits vorliegen und einfach weiterverarbeitet werden können.

In einer weiteren vorteilhaften Ausgestaltung der Erfindung werden die Gitter eines Modul derart zueinander angeordnet, dass sich die, insbesondere aerodynamischen, Eigenschaften zu mindestens teilweise kompensieren. Dies ist insbesondere vorteilhaft, da, insbesondere bei einer Reparatur, die Performanz der einzelnen Gitter und/oder eines Moduls beurteilt wird. So kann ein erstes Gitter eine einzige als schlecht eingestufte Schaufel aufweisen. Damit einhergehend weist das Gitter entsprechend eine bestimmte (weniger gute) Performanz (Wirkungsgrad) auf. Ein weiteres Gitter weist beispielsweise zwei als schlecht eingestufte Schaufeln auf. Auch dieses zweite Gitter weist eine bestimmte (weniger gute) Performanz auf. Durch geschickte Anordnung der Gitter zueinander können sich die negativen Wirkungen in der Performanz reduzieren bzw. sogar ganz aufheben. Dies bietet die Möglichkeit sogar Gitter weiter zu verwenden, die für sich genommen eine schlechte Performanz aufweist, jedoch im Zusammenspiel im Gesamtsystem nicht negativ ins Gewicht fallen.

In einer weiteren vorteilhaften Ausgestaltung der Erfindung wird nach der Beurteilung der Performanz des Bauteils festgestellt, ob diese Performanz des Bauteils im Soll liegt. Wenn die Performanz ausreichend ist, wird das Bauteil montiert wird. Wenn die Performanz nicht ausreichend ist, wird das Bauteil nachbewertet, um festzustellen, ob das Bauteil nachbearbeitbar ist. Dies ist insbesondere vorteilhaft, da damit nur noch sehr wenige Schaufeln händisch nachträglich untersucht werden müssen.

Weitere Vorteilhafte Ausgestaltung der Erfindung sind in den Unteransprüchen wiedergegeben.

Im Weiteren werden anhand der schematischen Zeichnung bevorzugte Ausführungsbeispiele der Erfindung näher beschrieben. Dabei zeigen:
- Figur 1: einen Ablaufdiagramm des erfindungsmäßen Verfahrens;
- Figur 2: eine Seitenansicht einer Verdichterschaufel;
- Figur 3A: eine axiale Ansicht eines Verdichtermoduls mit zwei Gittern und
- Figur 3B: eine Seitenansicht des Verdichtermoduls aus Figur 3A.

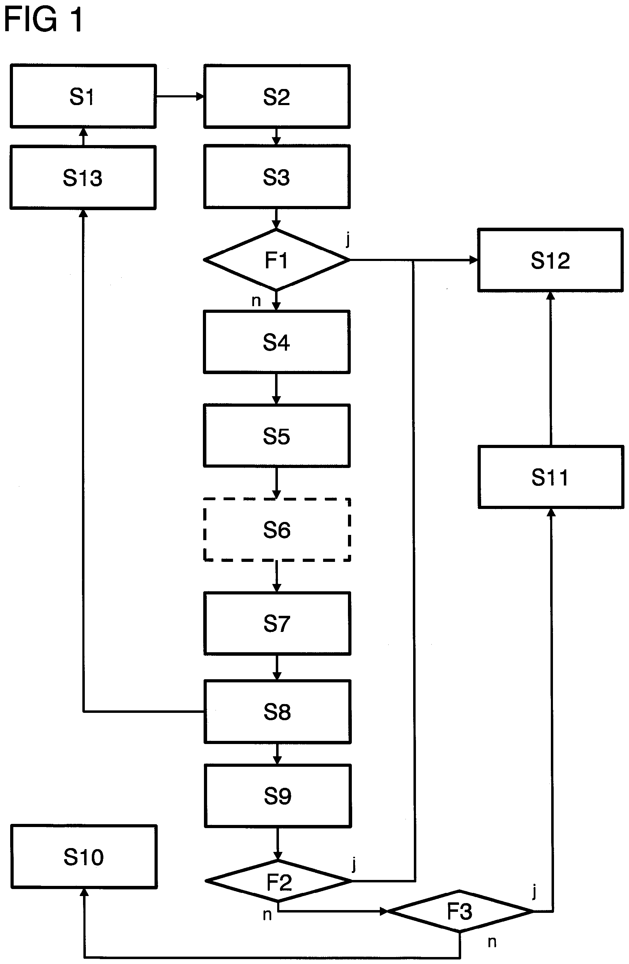

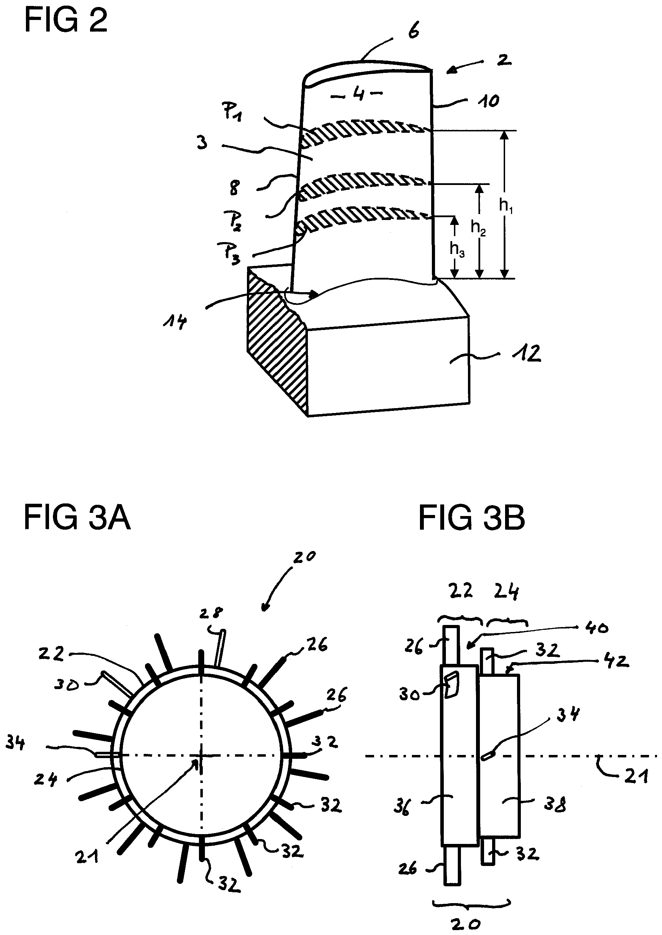

Die Figur 1 zeigt einen schematischen Ablaufdiagramm des erfindungsgemäßen Verfahrens. In Schritt S1 wird die Schaufel ausgelegt und auch die Herstelltoleranzen festgesetzt. In Schritt S2 wird die Schaufel nach dieser Auslegung hergestellt. In Schritt S3 werden Profilschnitte der hergestellten Schaufel generiert. Dazu soll kurz auf die Figur 2 eingegangen werden.

In Figur 2 ist eine Seitenansicht einer Verdichterschaufel 2 wiedergegeben. Die Verdichterschaufel 2 weist ein Schaufelblatt 3 mit einer konkav geformten Druckseite 4 und einer konvex geformten Saugseite 6 auf. Die beiden Seiten 4 und 6 münden auf der linken Seite der Figur 2 in die gebogene Vorderkante 8. Die Saugseite 6 und die Druckseite 4 münden in die Hinterkante 10, die zur Vorderkante 8 gegenüberliegend angeordnet ist. Das Schaufelblatt 3 ist an einem Schaufelrad 12 bzw. Schaufelring angeformt. Von diesem Schaufelring 12 ist nur ein Teil abgebildet. Zwischen dem Schaufelblatt 3 und dem Schaufelring 12 ist das Filet 14 angeordnet.

In Schritt S3 wird nun bei einer taktilen Messung beispielsweise auf der Höhe h₁ ein Mess-fühler einmal um das Schaufelblatt 3 entlang der gestrichelten Linie auf der Oberfläche des Schaufelblatts 3 geführt. Dabei wird aus dieser Messung der Profilschnitt P₁ generiert. In einer weiteren Messung wird der Vorgang auf der Höhe h₂ wiederholt, um den Profilschnitt P₂ zu erhalten. In einer weiteren Messung wird der Vorgang auf der Höhe h₃ wiederholt, um den Profilschnitt P₃ zu erhalten. Die notwendige Anzahl der Profilschnitte hängt von der jeweiligen Anwendung ab. Es kann aber auch lediglich ein Profilschnitt ausreichend sein.

In Block F1 wird festgestellt, ob die Profilschnitte des Schaufelblatts 3 innerhalb der Anforderungen liegen. Werden die Anforderungen in Block F1 erfüllt, so wird das Bauteil (hier eine Schaufel) in Schritt S12 montiert bzw. weiterverwendet. Werden die Anforderungen in Block F1 nicht erfüllt, so erfolgt in Schritt S4 eine optische, dreidimensionale Erfassung des Schaufelblattes 3. Dabei werden vorzugsweise nur die Schaufelblätter 3 optisch erfasst, die in Block F1 als schlecht eingestuft wurden. Dabei wird eine Punktewolke erzeugt, die sich datenverarbeitungstechnisch nicht vernünftig bearbeiten lässt. Daher wird diese Punktewolke in Schritt S5 in mindestens einem Flächenmodell überführt. Vorzugsweise werden 4 Flächenmodelle verwendet, wobei eine Fläche die Hinterkante 10, eine Fläche die Vorderkante 8, eine Fläche die Saugseite 6 und eine Fläche die Druckseite 4 wiederspiegeln. Wird im erfindungsgemäßen Verfahren beispielsweise ein ganzes Gitter bewertet, so wird in Schritt S6 ein gemitteltes Schaufelblatt berechnet, bei dem, insbesondere nur, die in Block F1 als gut eingestuften Schaufeln berücksichtigt werden. Das gemittelte, Schaufelblatt wird in Schritt S7 vom (kalten) Messzustand in den (heißen) Betriebszustand transformiert. Typischerweise findet die Messung bei Raumtemperatur statt. Dabei kann der Betriebszustand der Zustand mit dem höchsten Wirkungsgrad, mit der höchsten Drehzahl oder mit der höchsten Betriebstemperatur sein. In Schritt S8 werden die aerodynamischen und/oder strukturdynamischen, Eigenschaften des Schaufelblatts 3 bestimmt. Im Anschluss daran wird in Schritt S9 die Performanz des Bauteils, wie des Schaufelblattes, des Gitters, des Moduls oder des Gesamttriebwerks bestimmt. Darin wird in Abhängigkeit vom Massenstrom und dem Wirkungsgrad die Stabilitätsgrenze (Pumpgrenze) bestimmt. In Block F2 wird überprüft, ob die ermittelten Performanzwerte innerhalb von vorbestimmten Anforderungen liegen. Werden die Anforderungen in Block F2 erfüllt, so wird das Bauteil (hier eine Schaufel) in Schritt S12 montiert. Werden die Anforderungen in Block F2 nicht erfüllt, so erfolgt in Block F3 eine Nachprüfung statt, bei der festgestellt wird, ob sich das Schaufelblatt mit vernünftigem wirtschaftlichen Aufwand nachbearbeiten lässt. Werden die Anforderungen in Block F3 erfüllt, so wird das Bauteil (hier eine Schaufel) in Schritt S11 überarbeitet bzw. nachgearbeitet und/oder sogar repariert. Danach wird das überarbeitete Bauteil in Schritt S12 montiert. Werden die Anforderungen in Block F2 nicht erfüllt, so erfolgt in Schritt S10, dass das entsprechende Bauteil entsorgt wird. Vorzugsweise werden die Schritte S4 bis S9 automatisch durchgeführt.

Beim Durchführen des Verfahrens werden mit der Zeit Erkenntnis über die Wirkung von Bauteilabweichungen auf technische Zielgrößen gewonnen. So kann im Laufe der Zeit beispielsweise in Schritt S13 verbesserte Auslegungsregeln definiert werden. Dazu gehören unter anderem auch beispielsweise breitere in Schritt S3 verwendeten Toleranzbänder. In der Figur 1 kann Schritt S13 unmittelbar nach Schritt S8 erfolgen. Dies muss kann auch von Schritt S8 unabhängig erfolgen.

In den Figuren 3A und 3B ist ein Verdichtermodul 20 abgebildet. Die Figur 3A zeigt eine axiale Ansicht des Verdichtermoduls 20 mit einem ersten Laufgitter 22 und eine zweiten Laufgitter 24, das einen kleineren Radius aufweist als das erste Laufgitter 22. Ein solches Verdichtermodul 20 kann um eine Achse 21 gedreht werden. Das erste Laufgitter 22 weist in diesem Beispiel zehn in Block F1 als gut eingestufte Schaufeln 26 auf. Das erste Laufgitter 22 weist in diesem Beispiel zwei in Block F1 als schlecht eingestufte Schaufeln 28 und 30 auf. Das zweite Laufgitter 24 weist in diesem Beispiel elf in Block F1 als gut eingestufte Schaufeln 32 und eine in Block F1 als schlecht eingestufte Schaufel 34 auf.

Die als gut eingestuften Schaufeln sind als schwarz ausgefüllte Linien und die als schlecht eingestuften Schaufeln sind als schwarz umrandeten Linien mit weißer Füllung dargestellt.

In der Figur 3B ist eine Seitenansicht des Verdichtermoduls 20 aus Figur 3A abgebildet. Die beiden Laufgitter 22 und 24 sind miteinander verbunden, so dass diese im Betrieb synchron mit derselben Drehzahl drehen. Hier weisen sowohl das erste Laufgitter 22 als auch das zweite Laufgitter zylindrisch geformte Laufräder 36 und 38 auf. Typischerweise sind die Laufräder 36 und 38 konisch geformt. Am Umfang des ersten Laufrads 36 sind lediglich drei Schaufeln abgebildet und zwar oben und unten jeweils eine als gut eingestufte Schaufel 26 und im oberen Drittel die als schlecht eingestufte Schaufel 30. Die restlichen Schaufeln des ersten Laufgitters 22 wurden für das Verständnis nicht abgebildet.

Am Umfang des zweiten Laufrads 38 sind lediglich drei Schaufeln abgebildet und zwar oben und unten jeweils eine als gut eingestufte Schaufel 32 und in der Mitte die als schlecht eingestufte Schaufel 34. Die restlichen Schaufeln des zweiten Laufgitters 24 wurden ebenfalls für das Verständnis nicht abgebildet.

Am Umfang des ersten Laufrads 36 zwischen der oberen als gut eingestufte Schaufel 26 und der oberen als gut eingestufte Schaufel 32 des zweiten Gitters 24 ist ein erster Zwischenraum 40 vorhanden. In diesem ersten Zwischenraum 40 sind in einer Strömungsmaschine die nicht darstellten Leitschaufeln angeordnet, die zusammen mit den Laufschaufeln 26, 28 und 30 eine erste Verdichterstufe bilden.

Am Umfang des zweiten Laufrads 38 rechts neben den Schaufeln 32 und 34 ist ein zweiter Zwischenraum 42 vorhanden. In diesem zweiten Zwischenraum 42 sind in einer Strömungsmaschine die nicht darstellten Leitschaufeln angeordnet, die zusammen mit den Laufschaufeln 32 und 34 eine zweite Verdichterstufe bilden.

In Schritt S9 wird entsprechend dem obigen Verfahren die Performanz des ersten Laufgitters 22 bestimmt. In Schritt S9 wird entsprechend dem obigen Verfahren die Performanz des zweiten Laufgitters 24 bestimmt. Es kann dabei vorkommen, dass mindestens eines der Laufgitter 22 und/oder 24 die Überprüfung in Block F2 nicht erfüllen. So kann durch geschicktes Verdrehen des ersten Gitters 22 zum zweiten Gitter 24 die Performanz des gesamten Verdichtermoduls 20 die Überprüfung in Block F2 erfüllen. In diesem Beispiel ist die als schlecht eingestufte Schaufel 28 des ersten Laufgitters 22 um 10° in Uhrzeigersinn aus der 12Uhr-Position verdreht. Die als schlecht eingestufte Schaufeln 32 des zweiten Laufgitters ist auf der 9Uhr-Position angeordnet. Obwohl die Gitter für sich getrennt die Überprüfung in Block F2 nicht bestanden haben, konnte durch die Anordnung die negativen Auswirkungen soweit kompensiert werden, dass das gesamt Modul 20 die Überprüfung in Block F2 bestanden hat.

Somit wird hier ein Verfahren zur schnellen, automatisierten und analytischen Bewertung von Schaufeln vorgestellt. Schaufeln werden nach bestimmten Vorkriterien aussortiert. Typischerweise gibt es ein Toleranzband für das Schaufelprofil. Alle Schaufeln, die diese Toleranz nicht erfüllen, werden dann weiter untersucht, da die Abweichungen des Soll-Schaufelprofils möglicherweise einen vernachlässigbaren Einfluss auf die Aerodynamik haben und daher dennoch bedenkenlos verwendet werden können. Dazu werden vorzugsweise alle Schaufeln eines Gitters optisch vermessen. Die gemessenen Daten werden in ein Flächenmodell überführt. Vorzugsweise werden getrennte für die Vorder- und Hinterkante, sowie für die Saug- und Druckseite jeweils eine Fläche gebildet. Innerhalb eines Gitters werden die für gut befundenen Schaufeln gemittelt. Die Daten beruhen auf Messung, bei dem die Schaufeln im kalten Zustand ausgemessen wurden. Daher wird das gemittelte Schaufelgitter in einem (heißen) Betriebszustand transformiert (überführt). Anschließend wird der aerodynamische Wirkungsgrad und die Stabilität der vorläufig *aussortierten* Schaufel mit der gemittelten Schaufel verglichen und bewertet. Ist dieser Vergleich in Ordnung, so wird die *aussortierte* Schaufel als gut eingestuft und in Betrieb genommen.

### Bezugszeichenliste

- 2: Verdichterschaufel
- 3: Schaufelblatt
- 4: Druckseite
- 6: Saugseite
- 8: Vorderkante
- 10: Hinterkante
- 12: Schaufelring
- 14: Filet
- 20: Verdichtermodul
- 21: Drehachse
- 22: erstes Laufgitter
- 24: zweites Laufgitter
- 26: gute Schaufel von 22
- 28: schlechte Schaufel von 22
- 30: schlechte Schaufel von 22
- 32: gute Schaufel von 24
- 34: schlechte Schaufel von 24
- 36: erstes Laufrad von 22
- 38: zweites Laufrad von 24
- 40: erster Zwischenraum
- 42: zweiter Zwischenraum
- h₁, h₂, h₃: Höhen der Profilschnitte
- P₁, P₂, P₃: Profilschnitte
- S1 bis S13: Verfahrensschritte
- F1 bis F3: Abfragen

## Patentansprüche

1. Verfahren zur Herstellung und automatisierten und analytischen Bewertung der Auswirkungen von Schaufeln, auf ein Gitter, Modul und/oder auf das gesamte Triebwerk mit den Schritten:
a.) optische dreidimensionale Erfassung des Schaufelblattes (26, 28, 30; 32, 34) einer hergestellten Schaufel mittels Streifenmuster;
b.) Überführung der erfassten Werte in mindestens ein Flächenmodell (S5);
c.) Transformation der Schaufelblattdaten vom kalten Messzustand in den heißen Betriebszustand;
d.) Bewertung der aerodynamischen und/oder strukturmechanischen Eigenschatten des Schaufelblattes (26, 28, 30; 32, 34); und
e.) Bewertung der Performanz einer Schaufel (S9) wobei
- vor der dreidimensionalen Erfassung des Schaufelblattes, eine Vorbewertung (S1) des Schaufelblattes (26, 28, 30; 32, 34) durchgeführt wird wobei nur die Schaufeln weiterbewertet werden, die die Vorbewertung nicht erfüllen und vom Schaufelblatt mindestens ein Profilschnitt (P₁, P₂, P₃) rechnerisch und/oder taktil erzeugt wird und
- nach Schritt b.) ein Schritt b1.) folgt, bei dem ein gemitteltes Schaufelblatt (S6) berechnet wird und in Abhängigkeit von den in der Vorbewertung erfassten Profilschnitte (P₁, P₂, P₃) der Schaufelblätter des Gitters (22, 24) erfolgt bei dem die Sollschaufelgeometrie berücksichtigt wird und
- in Schritt c.) die Daten des gemittelten Schaufelblattes transformiert werden.

2. Verfahren nach Anspruch 1, **dadurch gekennzeichnet, dass** in Schritt b.) mindestens 4 Flächenmodelle verwendet werden, wobei eine Fläche für die Vorderkante (8), eine Fläche für die Hinterkante (10), eine Fläche für die Saugseite (6) und eine Fläche für die Druckseite (4) vorgesehen ist.

3. Verfahren nach Anspruch 1 oder 2, **dadurch gekennzeichnet, dass** die Gitter (22, 24) eines Moduls (20) derart zueinander angeordnet werden, dass sich die aerodynamischen Eigenschaften positiv beeinflussen.

4. Verfahren nach mindestens einem der vorherigen Ansprüche, **dadurch gekennzeichnet, dass** nach Schritt e.) festgestellt wird, ob die Performanz (F2) im Soll liegt.

5. Verfahren nach Anspruch 4, **dadurch gekennzeichnet, dass** wenn die Performanz ausreichend ist, das Bauteil montiert wird (S12) und wenn die Performanz nicht ausreichend ist, das Bauteil nachbewertet (F3) wird, um festzustellen, ob das Bauteil nachbearbeitbar ist.

6. Schaufel, hergestellt nach einem Verfahren gemäß mindestens einem der Ansprüche 1 bis 5.

7. Strömungsmaschine, enthaltend mindestens eine Schaufel gemäß Anspruch 6.

## Claims

1. A method for manufacturing blades and for evaluating the effects of said blades on a grille, module and/or the entire engine in an automated and analytical manner, comprising the steps of:
a) visually three-dimensionally recording the airfoil (26, 28, 30; 32, 34) of a manufactured blade by means of striated patterns;
b) transferring the recorded values into at least one surface model (S5);
c) transforming the airfoil data from the cold measuring state into the hot operating state;
d) evaluating the aerodynamic and/or structural-mechanical properties of the airfoil (26, 28, 30; 32, 34); and
e) evaluating the performance of a blade (S9),
wherein,
- before the airfoil is three-dimensionally recorded, a pre-evaluation (S1) of the airfoil (26, 28, 30; 32, 34) is carried out, with only the blades that have not fulfilled the pre-evaluation conditions being re-evaluated, and at least one profile section (P₁, P₂, P₃) being generated from the airfoil by way of calculation and/or in a tactile manner, and a step b1) following after step b), in which an averaged airfoil (S6) is calculated on the basis of the profile sections (P₁, P₂, P₃) of the airfoils of the grille (22, 24), as recorded in the pre-evaluation, and in which the target blade geometry is taken into account, and
- in step c), the data for the averaged airfoil are transformed.

2. The method according to claim 1, **characterized in that** in step b), at least 4 surface models are used, with one surface being intended for the leading edge (8), one for the trailing edge (10), one for the suction face (6) and one for the pressure face (4).

3. The method according to either claim 1 or claim 2, **characterized in that** the grilles (22, 24) of a module (20) are arranged relative to one another such that the aerodynamic properties are positively influenced.

4. The method according to at least one of the preceding claims, **characterized in that** it is determined according to step e) whether the performance (F2) is within the target range.

5. The method according to claim 4, **characterized in that**, if the performance is sufficient, the component is installed (S12), and if the performance is not sufficient, the component is re-evaluated (F3) to determine whether the component can be reworked.

6. A blade manufactured in accordance with a method according to at least one of claims 1 to 5.

7. A turbomachine comprising at least one blade according to claim 6.

## Revendications

1. Procédé de fabrication et d'évaluation automatisée et analytique des effets de pales sur une grille, un module et/ou sur l'ensemble du moteur, comprenant les étapes suivantes :
a) détection optique tridimensionnelle de l'aile portante (26, 28,30 ; 32,34) d'une pale fabriquée au moyen d'un modèle à bandes ;
b) transposition des valeurs détectées dans au moins un modèle de surface (S5) ;
c) transformation des données d'aile portante pour passer de l'état de mesure froid à l'état de fonctionnement chaud ;
d) évaluation des propriétés aérodynamiques et/ou mécaniques structurelles de l'aile portante (26, 28,30 ; 32, 34) ; et
e) évaluation de la performance d'une pale,
dans lequel, avant la détection tridimensionnelle de l'aile portante, une pré-évaluation (S1) de l'aile portante (26, 28, 30 ; 32, 34) est réalisée, sachant que seules les pales ne répondant pas à la pré-évaluation font l'objet d'une poursuite d'évaluation, et qu'au moins une coupe de profils (P₁,P₂,P₃) est générée de manière numérique et/ou tactile et que, après l'étape b), suit une étape b1) dans laquelle une aile portante moyenne (S6) est calculée et réalisée en fonction des coupes de profils détectées lors de la pré-évaluation (P₁,P₂,P₃) des ailes portantes de la grille (22, 24), étape dans laquelle il est tenu compte de la géométrie théorique des pales et, dans l'étape c), les données de l'aile portante moyenne sont transformées.

2. Procédé selon la revendication 1, **caractérisé en ce que**, dans l'étape b), au moins quatre modèles de surface sont utilisés, étant prévues une surface pour le bord avant (8), une surface pour le bord arrière (10), une surface pour le côté aspiration (6) et une surface pour le côté pression (4).

3. Procédé selon la revendication 1 ou 2, **caractérisé en ce que** les grilles (22, 24) d'un module (20) sont disposées l'une par rapport à l'autre de manière à ce que les propriétés aérodynamiques s'influencent positivement.

4. Procédé selon au moins une des revendications précédentes, **caractérisé en ce que**, après l'étape e), il est vérifié si la performance (F2) se trouve dans la plage théorique.

5. Procédé selon la revendication 4, **caractérisé en ce que**, si la performance est suffisante, la pièce est montée (S12), et, si la performance n'est pas suffisante, la pièce est réévaluée (F3) pour constater si la pièce peut être reprise.

6. Pale fabriquée selon un procédé selon au moins une des revendications 1 à 5.

7. Turbomachine contenant au moins une pale selon la revendication 6.
